Europäisches Patentamt

European Patent Office

Office européen des brevets

(11) Numéro de publication: **0 181 238**
**B1**

## (12) FASCICULE DE BREVET EUROPÉEN

(45) Date de publication du fascicule du brevet:
08.06.88

(21) Numéro de dépôt: 85400825.7

(22) Date de dépôt: 26.04.85

(51) Int. Cl.⁴: **B 64 D 1/06,** F 41 F 5/02,
**B 64 D 1/04**

(54) Dispositif de retenue et de largage d'un fil assurant l'armement de fusées de bombes.

(30) Priorité: 27.04.84 FR 8406716

(43) Date de publication de la demande:
14.05.86 Bulletin 86/20

(45) Mention de la délivrance du brevet:
08.06.88 Bulletin 88/23

(84) Etats contractants désignés:
DE GB IT SE

(56) Documents cité:
GB-A-496 953
US-A-3 073 643
US-A-4 088 055

(73) Titulaire: R. ALKAN & Cie., Rue du 8 mai 1945,
F-94460 Valenton (FR)

(72) Inventeur: Coutin, Pierre, 117, avenue Général
Michel Bizot, F-75012 Paris (FR)

(74) Mandataire: Hud, Robert, Cabinet COLLIGNON 6,
rue de Madrid, F-75008 Paris (FR)

LIBER, STOCKHOLM 1988

## Description

Certains projectiles, et les bombes d'aviation en particulier, comportent des fusées de mise à feu. L'armement de ces fusées est généralement obtenu par l'arrachement d'un fil de sécurité. Ce fil se termine par un anneau retenu par un déclencheur auxiliaire complétant le dispositif principal de largage de la bombe.

Lors du largage de la bombe, on demande à ce déclencheur auxiliaire commandé électriquement soit de retenir l'anneau et de provoquer de ce fait l'armement de la fusée correspondante, soit de libérer l'anneau dans le cas de tir inerte de la bombe. On doit pouvoir avant le largage de la bombe passer du tir actif au tir inerte et inversement sans que l'anneau soit libéré. Selon les conditions imposées par l'utilisateur le déclencheur auxiliaire doit retenir l'anneau après un tir actif ou au contraire l'abandonner après armement de la fusée et coupure du courant d'alimentation.

Le document US-A-4 088 055 divulgue un mécanisme d'armement d'une bombe qui permet de passer, avant le largage de la bombe, du tir actif au tir inerte et inversement sans libération de l'anneau du fil de sécurité. Ce mécanisme, conçu pour être insensible aux chocs et vibrations orientés verticalement, comprend, pour la retenue de l'anneau, une bille de verrouillage contrainte par un plongeur sous l'action d'un ressort. Lors de l'excitation d'un électro-aimant une pièce coulissante en L maintient la bille en position verrouillée, en permettant l'armement de la bombe, alors que la coupure du courant électrique libère la bille pour un tir inerte ou pour l'éjection de l'anneau après un tir actif.

La présente invention a pour objet un dispositif de retenue et de largage de l'anneau d'extrémité d'un fil d'armement de bombe qui permet, avant le largage de la bombe, de passer du tir actif au tir inerte et inversement, sans que l'anneau soit libéré, qui permet d'éjecter l'anneau dans le cas d'un tir inerte ou après armement de la bombe et coupure du courant, et dont les éléments sont agencés pour empêcher pratiquement tout déclenchement intempestif dû aux accélérations ou vibrations habituellement subies à bord d'avion, aussi bien en direction horizontale qu'en direction verticale.

Selon l'invention, le dispositif de retenue et de largage de l'anneau d'extrémité du fil de sécurité dont l'arrachage assure l'armement de fusées de bombes se caractérise par un levier pratiquement rectiligne pivotant sur un axe fixe et assurant la liaison cinématique entre un doigt de retenue de l'anneau par une articulation, un crochet d'encliquetage du dispositif par un galet du levier et le mécanisme de déclenchement du déclencheur de bombe par un autre galet du levier en regard d'un élément effaçable dudit mécanisme, le mécanisme déclencheur en position armée agissant par l'intermédiaire de l'élément effaçable sur le levier pour maintenir le doigt en position de retenue alors que, en position déclenchée dudit mécanisme, la position du doigt est commandée par celle du crochet encliquetable, le doigt étant ramené en position de retenue par l'élément effaçable lors de la remise en position sous l'action du réarmement du mécanisme déclencheur de bombe.

On décrira ci-après un exemple d'exécution de l'invention en référence au dessin annexé, dans lequel:

la figure 1 représente le dispositif en position d'attente, le déclencheur de bombe principal étant armé (crochets fermés);

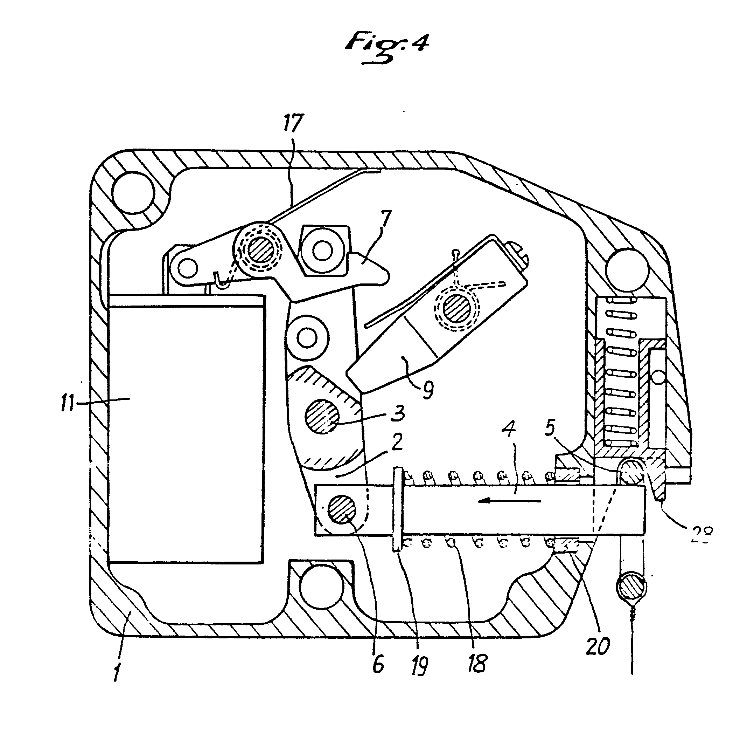

la figure 2 est une coupe du levier principal selon la ligne A-A de la figure 1 en montrant ce levier de profil;

la figure 3 est une coupe du dispositif d'éjection selon la ligne B-B de la figure 1;

la figure 4 représente le dispositif immobilisé par l'électro-aimant du déclencheur auxiliaire (tir actif), le déclencheur de bombe principal étant déclenché (bombe larguée);

la figure 5 représente le dispositif en position d'abandon et d'éjection de l'anneau (alimentation électrique de l'électro-aimant coupée), le déclencheur de bombe principal étant déclenché (bombe larguée);

la figure 6 représente un dispositif qui est analogue en grande partie à celui de la figure 1 mais dans lequel, en position d'enclenchement du levier, le doigt retenant l'anneau peut être poussé élastiquement pour permettre l'insertion de cet anneau en position de retenue;

la figure 7 représente, selon la coupe C-C de la figure 6, le détail de la liaison du doigt retenant l'anneau avec l'extrémité du levier principal; et

la figure 8 montre, suivant la même coupe C-C, le doigt de retenue de l'anneau poussé en position de recul.

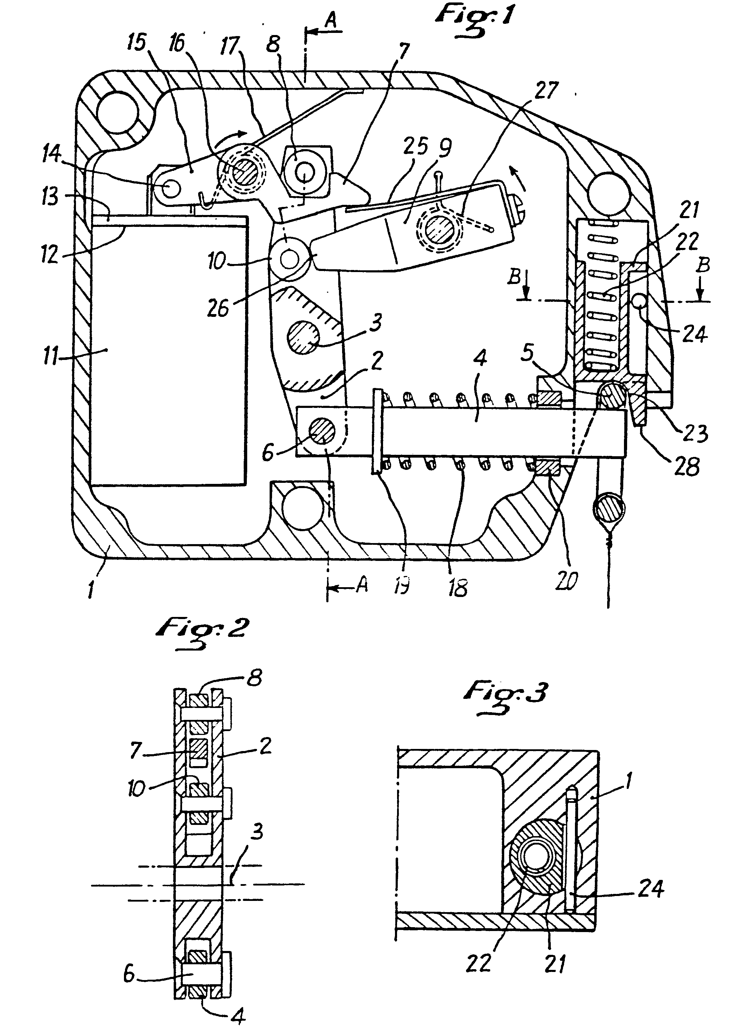

Sur la figure 1, on a représenté en 1 le carter renfermant le dispositif, en 2 le levier principal articulé sur l'axe fixe 3 et en liaison d'une part avec le doigt 4 de retenue d'un anneau 5 par l'articulation 6, d'sutre part avec le crochet de retenue 7 par l'intermédiaire d'un galet 8 porté par le levier 2 et enfin avec un élément effaçable 9 du mécanisme de déclenchement du déclencheur de bombes par l'intermédiaire d'un autre galet 10.

On a représenté en 11 un électro-aimant cuirassé sans pièce mobile dont la tranche supérieure 12 maintient au collage, lorsqu'il est alimenté, un disque 13 en fer doux articulé en 14 sur la queue 15 du crochet de retenue 7, lequel peut pivoter sur l'axe fixe 16. L'ensemble disque et crochet est sollicité dans le sens de la flèche par un ressort 17 favorisant l'ouverture du crochet 7.

On a représenté en 18 un ressort à boudin qui tend à provoquer le retrait du doigt 4 en prenant appui d'une part sur la collerette 19 du doigt 4 et d'autre part sur le palier 20 légèrement évasé pour permettre l'alignement du doigt 4 avec l'articulation 6 du levier 2.

En 21, on a figuré une pièce cylindrique coulissante sollicitée vers le bas par un ressort 22. Cette pièce permet par sa levée l'introduction de l'anneau 5 dans l'encoche 23 ménagée dans le carter 1 et éjecte l'anneau lorsque le doigt 4 est rétracté par le déclenchement du levier 2. Une goupille 24 limite la course d'éjection de la pièce 21 et empêche sa rotation.

Sur l'élément 9 du mécanisme de déclenchement du déclencheur principal on a prévu en 25 une pièce élastique (ressort à lame par exemple) qui agit sur le crochet de retenue 7 pour amener au collage le disque 13 sans nécessiter une grande précision dans les positions relatives et permettre à l'extrémité 26 de l'élément 9 d'amener et de maintenir le levier 2 en position par l'intermédiaire du galet 10.

Un ressort 27 sollicite l'effacement de l'élément 9 dans le sens de la flèche. Cet élément est actionné par le mécanisme du déclencheur principal et, lorsqu'il est effacé, il est sans contact avec le dispositif et ne peut communiquer les secousses ou rebonds éventuels du déclencheur principal.

Le fonctionnement du dispositif s'effectue comme indiqué ci-après. Normalement, la bombe est mise à poste par les moyens habituels et les crochets du déclencheur sont donc en position de fermeture, le dispositif étant alors dans la position représentée sur la figure 1. Après mise à poste de la bombe, on introduit l'anneau 5 dans l'encoche 23 en lui faisant soulever la pièce 21 par son bec 28 contre l'action du ressort 22. L'anneau 5 est alors retenu par le doigt 4.

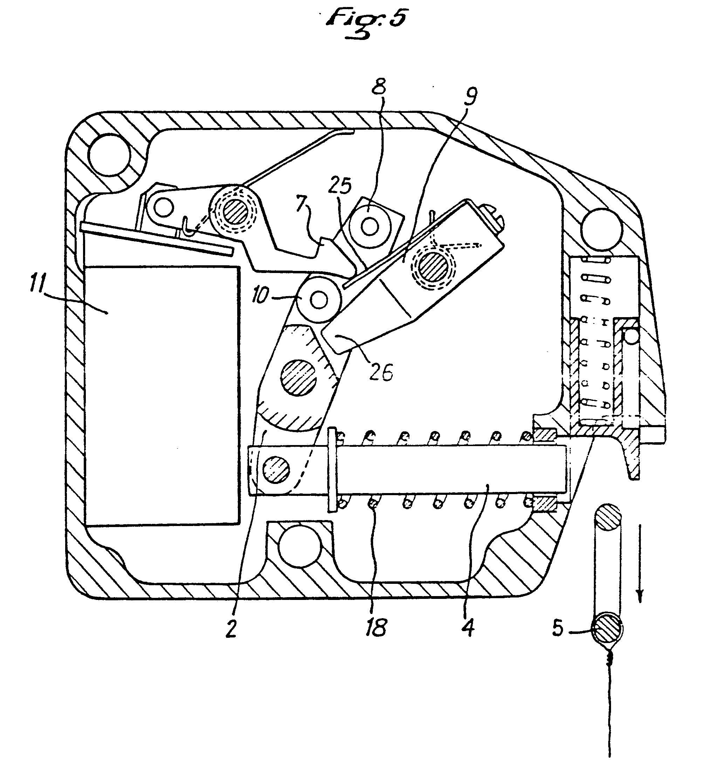

Si le tir doit être actif, on alimente l'électro-aimant 11, ce qui a pour effet de maintenir le crochet 7 en position d'accrochage par rapport au galet 8 du levier principal 2, lequel se trouve immobilisé bien que l'élément 9 du mécanisme de déclenchement principal s'efface aidé par le ressort 27 et occupe la position représentée sur la figure 4. Le doigt 4 retient l'anneau de sorte que le fil de sécurité dont il a été question plus haut est arraché.

On remarquera que la traction exercée sur l'anneau provoque des réactions sur le doigt 4 au niveau du palier 20 et de l'axe d'articulation 6. La réaction sur l'axe 6 est reprise vers le haut par l'axe fixe 3 par l'intermédiaire du levier 2 qui est soumis à un léger moment tendant à parfaire l'encliquetage sur le crochet 7. Si la traction sur l'anneau ne s'exerce pas exactement dans un plan vertical les réactions latérales sont reprises par l'appui latéral de la collerette 19 contre les parois du boîtier 1.

Lorsque l'on coupe l'alimentation de l'électro-aimant 11, le ressort 17 fait basculer le crochet 7 autour de son axe 16 dans le sens de la flèche. Le levier 2, libéré, est soumis à l'action du ressort 18, le doigt 4 se déplace dans le sens de la flèche de la figure 4 et l'anneau 5 est abandonné. Le dispositif prend alors la position représentée sur la figure 5.

Si le tir doit être inerte, on n'alimente pas l'électroaimant 11, le déclencheur principal amène l'élément 9 dans la position de la figure 5.

Le levier principal 2 n'étant pas retenu, le ressort 18 provoque le retrait du doigt 4 et l'anneau 5 est abandonné au moment du tir. Le fil de sécurité n'est pas arraché.

On remarquera que, tant que le déclencheur principal n'est pas déclenché, l'élément 9 reste en place et maintient le levier principel 2. On peut donc envisager à tout moment un tir actif ou un tir inerte avant le largage de la bombe sans qu'aucune pièce ne bouge. Après un tir, le dispositif est finalement dans la position représentée sur la figure 5.

Le réarmement du déclencheur principal (crochets fermés) provoque la remise en position de l'élément 9 dont l'extrémité 26 agissant sur le galet 10 ramène le levier principal 2 dans la position de la figure 1. Par ailleurs, le ressort à lame 25 fixé sur l'élément 9 oblige le crochet 7 à s'engager complètement sur le galet 8. Toutes les pièces sont alors en position d'attente comme représenté sur la figure 1.

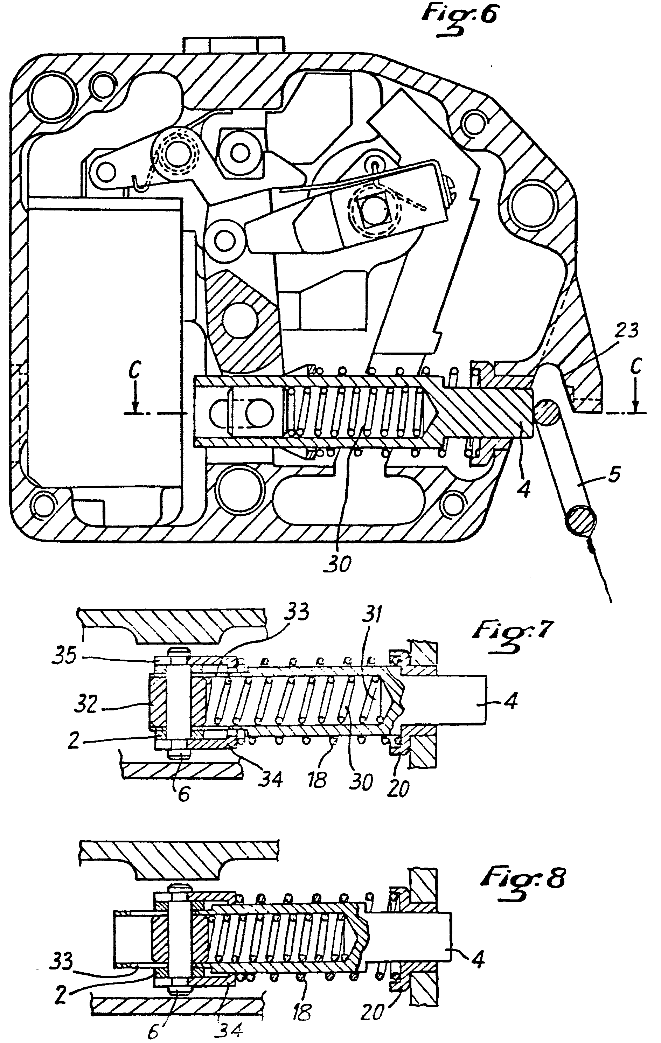

Il peut arriver que des organes empêchent l'éjection de l'anneau qui doit alors se dégager latéralement d'une façon inhabituelle. L'encombrement des pièces 21, 22, 23 et 24 n'étant plus justifié, on a imaginé, pour la mise en place de l'anneau dans l'encoche 23, un retrait élastique du doigt 4 (figures 6 à 8). Le ressort 18 agit alors entre le palier 20 et une pièce 34 en U qui coiffe le levier 2 et dont les ailes portent desencoches 35 se logeant dans des gorges correspondantes prévues aux extrémités de l'axe 6. Le ressort 18 egit donc sur l'axe 6, c'est-à-dire sur le levier 2 indépendamment du doigt 4.

Grâce à des trous oblongs 33, le doigt 4 peut alors reculer par rapport à l'encoche 23 sans modification dans la position du levier 2. Ce recul est limité par la longueur des trous oblongs 33. Dans le doigt 4, on a prévu un alésage 31 dans lequel un ressort 30 agit entre le fond de l'alésage 31 et un bouchon 32 que traverse l'axe 6.

A la mise en place de l'anneau 5, on fait agir celui-ci sur l'extrémité du doigt 4, ce qui a pour effet d'amener ce doigt dans la position de la figure 6 en comprimant le ressort 30. Dès que l'anneau 5 se trouve dans l'encoche 23 le doigt 4 reprend sa place initiale.

Le fonctionnement du dispositif ne subit par ailleurs aucun changement.

**Revendications**

1. Dispositif de retenue et de largage de l'anneau d'extrémité (5) du fil de sécurité dont l'arrachage assure l'armement de fusées de bombes, caractérisé par un levier pratiquement rectiligne (2) pivotant sur un axe fixe (3) et assurant la liaison cinématique entre un doigt de retenue (4) de l'anneau (5) par une articulation (6), un crochet d'encliquetage (7) du dispositif par un galet (8) du levier (2) et le mécanisme de déclenchement du déclencheur de bombe par un autre galet (10) du levier (2) en regard d'un élément effaçable (9) dudit mécanisme, le mécanisme déclencheur en position armée agissant par l'intermédiaire de l'élément effaçable (9) sur le levier (2) pour maintenir le doigt (4) en position de retenue alors que, en position déclenchée dudit mécanisme, la position du doigt (4) est commandée par celle du crochet encliquetable (7), le doigt (4) étant ramené en position de retenue par l'élément effaçable (9) lors de la remise en position sous l'action du réarmement du mécanisme déclencheur de bombe.

2. Dispositif selon la revendication 1, caractérisé en ce que les efforts transmis au dispositif par la traction de l'anneau (5) sont appliqués directement sur l'axe fixe (3) par le levier (2) avec une composante tendant à parfaire l'encliquetage.

3. Dispositif selon la revendication 1 ou la revendication 2, caractérisé en ce que, en cas de tir inerte, l'anneau (5) est éjecté par un piston cylindrique (21) orienté et limité dans sa course par une goupille tangentielle (24).

4. Dispositif selon la revendication 1 ou la revendication 2, caractérisé en ce que la mise en place de l'anneau (5) est rendue possible grâce à un ressort (30) intérieur au doigt (4) et prenant appui d'une part dans le fond de l'alésage (31) du doigt et d'autre part sur l'axe d'articulation (6) par l'intermédiaire d'un bouchon (32), l'ensemble permettant alors le retrait élastique du doigt (4) grâce à des fentes (33) de ce doigt traversé es par l'axe d'articulation (6).

5. Dispositif selon l'une quelconque des revendications 1, 2 et 4, caractérisé en ce qu'un ressort (18) à l'extérieur du doigt (4) prend appui sur l'axe d'articulation (6) par l'intermédiaire d'une pièce en U (34) coiffant le levier (2) et dont les ailes portent des encoches (35) se logeant dans des gorges prévues sur l'axe d'articulation (6).

6. Dispositif selon la revendication 1, caractérisé en ce que l'élément effaçable (9) porte un ressort (25) qui agit sur le crochet (7) pour le maintenir en position de retenue de l'anneau (5) lorsque le déclencheur de bombe est en position d'armement.

7. Dispositif selon la revendication 1, caractérisé en ce que le crochet (7) est maintenu en position de retenue par un électro-aimant (11) agissant sur la queue (15) du crochet (7) pivotant sur un axe fixe (16).

## Patentansprüche

1. Vorrichtung zum Halten und Freigeben, Ausklinken oder Abwerfen eines Ringes (5) bzw. einer Schlaufe oder Öse am Ende eines Sicherheitsdrahtes, dessen Abziehen die Entsicherung des Zünders von Bomben sicherstellt, gekennzeichnet durch einen praktisch geradlinigen Hebel (2), der um eine feststehende Achse (3) schwenkbar ist und die kinematische Verbindung zwischen einem Haltezapfen (4) für den Ring (5) über eine Anlenkung (6), einer Sperrklinke (7) der Vorrichtung über eine Rolle (8) des Hebels (2), und dem Auslösemechanismus des Auslösers der Bombe über eine weitere Rolle (10) des Hebels (2) gegenüber einem Rückstellteil (9) sicherstellt, bei welcher der Auslösemechanismus in der armierten bzw. geschärften Stellung über das Rückstellteil (9) auf den Hebel (2) wirkt, um den Zapfen (4) in der Haltestellung zu halten, wobei die Stellung des Zapfens durch die Sperrklinke (7) steuerbar ist und der Zapfen (4) mittels des Rückstellteils (9) bei der Überführung durch die Wiederbeladung des Auslösemechanismus der Bombe in die Haltestellung zurückführbar ist.

2. Vorrichtung nach Anspruch 1, dadurch gekennzeichnet, daß die auf die Vorrichtung durch Zug am Ring (5) übertragenen Kräfte über den Hebel (2) direkt auf die feststehende Achse (3) aufgebracht werden, wobei eine Kraftkomponente auf die Ausführung der Sperrbewegung gerichtet ist.

3. Vorrichtung nach Anspruch 1 oder 2, dadurch gekennzeichnet, daß der Ring (5) bei wirkungslosem Schuß durch einen zylindrischen Kolben (21), der durch einen tangentialen Stift (24) ausgerichtet und in seinem Weg begrenzbar ist, ausstoßbar ist.

4. Vorrichtung nach Anspruch 1 oder 2, dadurch gekennzeichnet, daß eine Feder (30) innerhalb des Zapfens (4) die Anordnung des Ringes (5) eröglicht, wobei die Feder sich einerseits auf dem Boden der Bohrung (31) des Zapfens (4) und andererseits auf der Achse der Anlenkung (6) über einen Verschluß (32) abstützt, so daß die gesamte Anordnung nun den elastischen Rückzug des Zapfens (4) wegen der Schlitze (33) in diesem Zapfen ermöglicht, durch welche die Achse der Anlenkung (6) geführt ist.

5. Vorrichtung nach einem der Ansprüche 1, 2 und 4, dadurch gekennzeichnet, daß sich eine Feder (18) außerhalb des Zapfens (4) auf der Achse der Anlenkung (6) über ein U-förmiges Teil (34) abstützt, welches auf dem Hebel (2) sitzt und dessen Schenkel rechteckige Aussparungen (35) aufweisen, welche sich in Vertiefungen befinden, die auf der Achse der Anlenkung (6) vorgesehen sind.

6. Vorrichtung nach Anspruch 1, dadurch gekennzeichnet, daß das Rückstellteil (9) eine Feder (25) aufweist, welche so auf die Klinke (7) einwirkt, daß diese in der Stellung gehalten wird, in welcher sich der Ring (5) in der Auslösestellung des Auslösers der Bombe befindet.

7. Vorrichtung nach Anspruch 1, dadurch gekennzeichnet, daß die Klinke (7) durch einen Elektromagneten (11) in Haltestellung gehalten wird, welcher auf das hintere Ende (15) der auf einer feststehenden Achse (16) schwenkbar angeordneten Klinke (7) einwirkt.

**Claims**

1. Release and retention device of the end ring (5) of the safety wire, the pulling up of which causes the bomb fuses to be armed, characterised by a lever which is practically rectilinear (2) pivoting about a fixed pin (3) and providing for a kinematic connection between a retaining finger (4) of the ring (5) via an articulation (6), a latching hook (7) of the device through a roller (8) of the lever (2) and the releasing mechanism of the bomb release through another roller (10) of the lever (2) opposite a removable component (9) of the said mechanism whereby the releasing mechanism in the armed position acts by means of the removable component (9) on the lever (2) to maintain the finger (4) in the retention position whilst in the triggererd position of the said mechanism, the position of the finger (4) is controlled by that of the latching hook (7), the finger (4) being brought back into the retention position by the removable component (9) during the operation for restoring the position by the action of the rearming of the strong release mechanism.

2. Device according to claim 1, characterised in that the forces transmitted to the device by the tractive force of the ring (5) are applied directly to the fixed pin (3) by the lever (2) with a component which tends to complete the latching operation.

3. Device according to claim 1 or claim 2, characterised in that in the case of inert firing, the ring (5) is ejected by a cylindrical piston (21) which is orientated and limited in its stroke by a tangential pin (24).

4. Device according to claim 1 or claim 2, characterised in that the positioning of the ring (5) is made possible by a spring (38) inside the finger (4) which is supported on the one hand in the bottom of the bore (31) of the finger and on the other hand on the hinge pin (6) by means of a plug (32) the whole unit making possible the flexible withdrawal of the finger (4) by means of the slits (33) of this finger through which the hinge pin (6) passes.

5. Device according to any one of claims 1, 2 and 4, characterised in that a spring (18) outside the finger (4) is supported on the hinge pin (6) by means of a U piece (34) covering the lever (2) and the wings of which are provided with notches (35) which are accommodated in the throat pieces provided on the hinge pin (6).

6. Device according to claim 1, characterised in that the removable component (9) is provided with a spring (25) which acts on the hook (7) to maintain it in the retention position of the ring (5) when the bomb release is in the armed position.

7. Device according to claim 1, characterised in that the hook (7) is held in the retention position by an electromagnet (11) acting on the tail (15) of the hook (7) pivoting on a fixed pin (16).

*Fig:1*

*Fig:2*

*Fig:3*

# Fig. 4

Fig. 5

*Fig.6*

*Fig.7*

*Fig.8*